Europäisches Patentamt

European Patent Office

Office européen des brevets

(11) Publication number: **0 304 194**
**A2**

## EUROPEAN PATENT APPLICATION

(21) Application number: **88307180.5**

(22) Date of filing: **03.08.88**

(51) Int. Cl.⁴: **G06K 19/08**

(30) Priority: **13.08.87 GB 8719197**
**05.11.87 GB 8726009**

(43) Date of publication of application:
**22.02.89 Bulletin 89/08**

(84) Designated Contracting States:
**DE FR**

(71) Applicant: **CHUBB ELECTRONICS LIMITED**
**Western Road**
**Bracknell Berkshire RG12 1RG(GB)**

(72) Inventor: **Drinkwater, Kenneth John**
**210 Arabella Drive**
**London SW15 5LQ(GB)**

(74) Representative: **Obee, Robert William**
**Racal Group Services Ltd. Group Legal**
**Department Richmond Court 309 Fleet Road**
**Fleet, Hants. GU13 8BU(GB)**

(54) **Data carriers.**

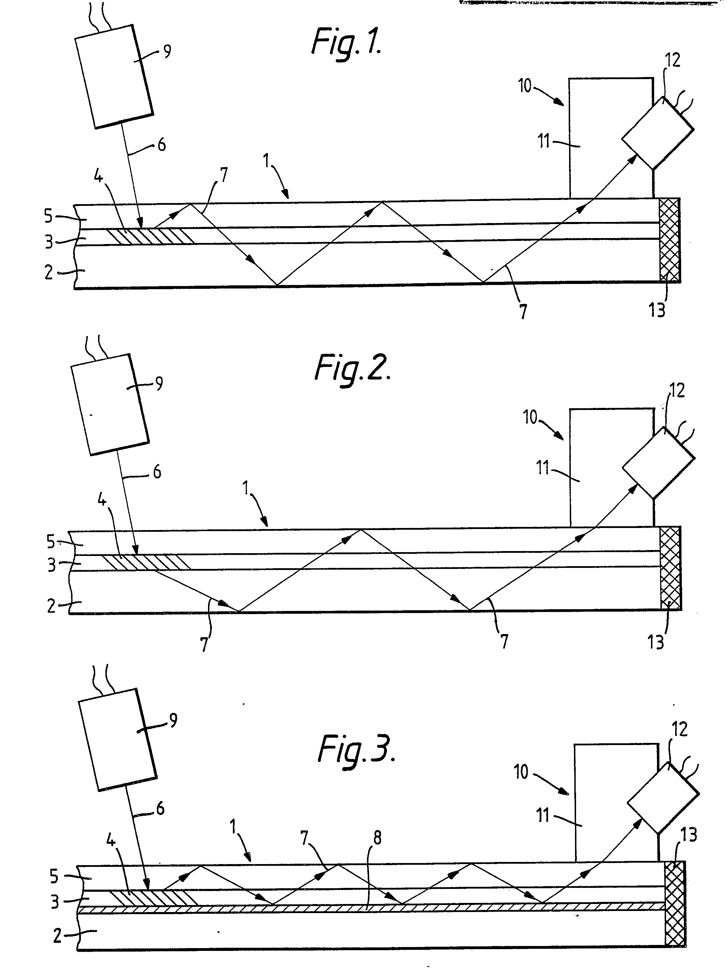

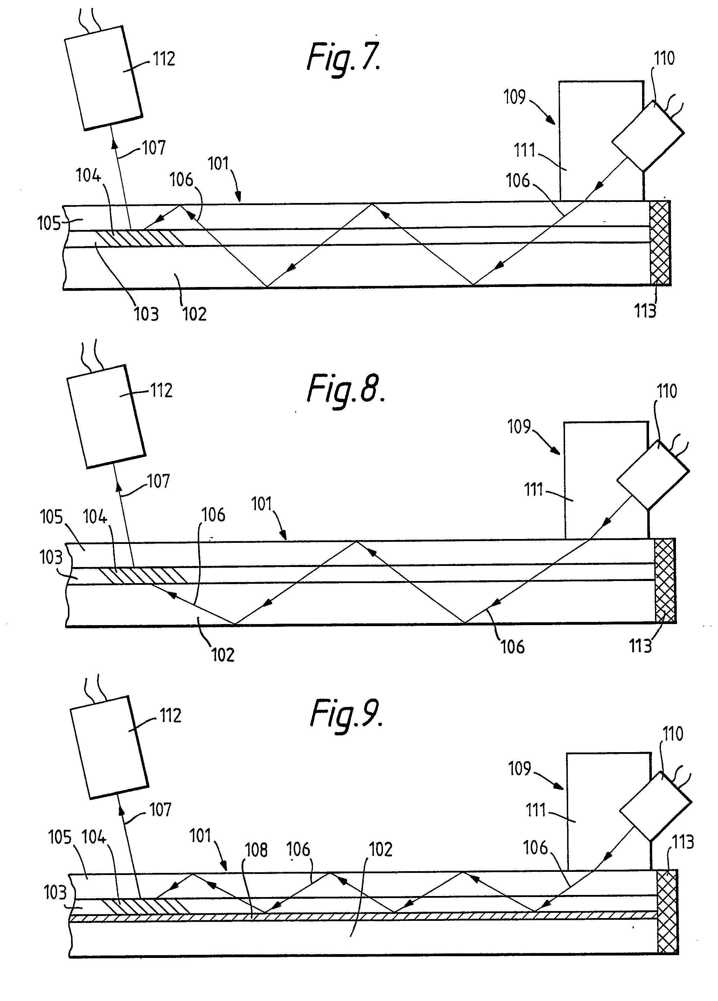

(57) A carrier (1,101) bears data in the form of one or more holographic optical elements (HOEs) (4,104) representing e.g. identification data on an access-control card or authentication data for documents or goods. In Fig 1, each HOE (4) is adapted to couple into the structure of the carrier light directed at a selected angle from an emitter (9) in a reading apparatus and to direct that light within the carrier at an angle such that it is transmitted through the carrier by a process involving total internal reflection at an exposed surface thereof. The light can therefore be coupled out of the carrier at a location spaced from the HOE (4) through an element (11) of selected refractive index placed into contact with the surface of the carrier, and sensed by an associated detector (12). Alternatively in Fig 7 there is a light path from an emitter (110) coupling light into the carrier through an element (111) of selected refractive index, with the light being transmitted by total internal reflection to a HOE (104) which couples it out to a detector (112). In either case, detection of light from one location on the carrier when it is illuminated at another location therefore signals the presence of the HOE (4,104) which otherwise remains completely invisible. The presence or absence of HOEs at specified positions along a track or in other forms of array can therefore be used to represent data bits, to be detected along parallel tracks or at different array positions by virtue of the light transmission through the carrier, making fraudulent reproduction or imitation of the data very difficult.

*Fig.1.*

*Fig.7.*

## Data Carriers

The present invention relates generally to data carriers and more particularly to the storage of data represented by means of holographic optical elements (hereinafter referred to as HOEs). By "holographic optical element" we mean a holographically-produced diffraction grating structure which is adapted to reconstruct an output light beam in a specific direction by diffraction of incident light of a specific wavelength and incidence direction. The simplest forms of HOE are plane diffraction gratings which constitute the diffractive equivalents of plane mirrors or prisms. However it is also possible to produce HOEs with optical power to constitute e.g. the diffractive equivalents of lenses or concave/convex mirrors, or with more complex characteristics so as to reconstruct a plane beam from a complex or "scrambled" incident beam or vice versa.

The invention is concerned in particular with the use of HOEs for security purposes, where they may be applied to, for example: access-control cards or the like tokens, where they represent authorisation or identification data necessary e.g. for gaining access to a restricted area, operation of a cash-dispensing machine or the provision of some other service; documents such as credit cards, tickets, passports, licences, identity cards, wills, cheques and the like, as a means of authenticating the same; and goods which are vulnerable to counterfeiting, for example audio/video tapes and discs and various other high-value branded consumer goods, again as a means of distinguishing the genuine goods from unauthorised copies. Another potential field of use is where HOEs represent units of value on a card or other carrier, relevant for purchasing goods from a vending machine or paying for time on a public telephone for example. However, this list of potential applications is not intended to be exhaustive and the term "data" as used herein is to be given its widest meaning. In a simple embodiment of the invention as defined below, this "data" may be represented merely by the presence of a single HOE at a specified location on an article; in more complex embodiments there may be a multiplicity of HOEs arranged in tracks or in other specified spatial relationships, as more particularly exemplified hereinafter.

Data carriers of this general character are known e.g. from International patent application no. PCT/GB86/00109 (WO 86/05300) of KJ Hayden, where data is represented by single or coded arrays of thick-film reflection HOEs and reading or recognition of the data is achieved by detection of light reflected in specific directions from the individual HOE(s) when they are illuminated at specific incidence angles. This known form of data storage and read-out is in general more secure against fraudulent imitation or copying of the data than the more usual techniques for coding access-control cards and the like - such as magnetic stripes and printed bar-codes but is certainly not immune. For example it would be possible to identify the locations and reflection characteristics of the HOEs on a card coded in accordance with the Hayden application by simple trial and error experimentation with various illumination and viewing angles - achievable by eye in the case of HOEs replaying in visible light or with a suitable lamp and photodetector for HOEs constructed to replay only in the infra-red or other non-visible band. It would also be possible to creat a so-called "contact copy" of the identified HOEs by overlaying with a photographic emulsion through which they are illuminated at the correct incidence angle to replay back into the emulsion and interfere therein with the illuminating beam.

It is therefore an object of the present invention to provide for the storage of data by means of HOEs in a manner which can achieve a significantly improved immunity against fraudulent reproduction as compared with the above-described prior art technique.

In a first aspect the invention accordingly resides in a data carrier bearing at least one holographic optical element (HOE) at a (respective) first location, the or each said HOE being adapted to couple into the structure of the data carrier light of a selected wavelength which is incident thereto from a selected direction; the data carrier being constructed such as to trap the light coupled by the or each said HOE and transmit the same through the structure of the data carrier to one or more respective second locations spaced from the first location(s), by a process involving total internal reflection of such light at an exposed surface of the data carrier; whereby the transmitted light can be coupled out of the structure of the data carrier by placing an element of selected refractive index into contact with said exposed surface at said second location(s).

In a second aspect the invention resides in a data carrier constructed such as to trap within its structure light of a selected wavelength which is incident thereto at a selected angle through an element of selected refractive index placed into contact with an exposed surface of the data carrier at one or more first locations, and to transmit the same through its structure to one or more respective second locations spaced from the first location-

(s) by a process involving total internal reflection of such light at said exposed surface; the data carrier bearing at the or each said second location a holographic optical element (HOE) which is adapted to couple out of the structure of the data carrier in a selected direction light which is incident thereto by transmission from (the respective) said first location as aforesaid.

With a data carrier constructed in accordance with either of the above-defined aspects, therefore, it is impossible to detect the light coupled into the carrier by the HOE(s) (in the first aspect) or to illuminate the HOE(s) at the correct incidence angle (in the second aspect) without the interposition of an element of selected refractive index placed into contact with the surface of the carrier at the appropriate location, which significantly increases the difficulty of even identifying the existence of the HOE(s). In other words the HOE(s) will remain invisible to any external inspection involving illumination of the external surface of the carrier through air from any incident direction. In addition, it is impossible to make a "contact copy" of the HOE(s) in a data carrier according to either aspect of the invention because the reconstructed beam (in the first aspect) or the incident beam (in the second aspect) exists only within the structure of the carrier itself.

The invention also resides in apparatus for reading the data represented by the HOE(s) of a data carrier as defined above, and methods for manufacturing suitable HOEs, examples of which are more particularly described hereinafter and as are defined in the appended claims.

It is to be understood that the use of the term "light" herein does not imply a limitation to electromagnetic radiation lying strictly within the visible spectrum and includes in particular radiation within the infra-red and ultra-violet bands.

The invention will now be more particularly described, by way of example only, with reference to the accompanying schematic drawings in which:

Figures 1 to 3 are cross-sections through examples of access-control cards embodying the first aspect of the invention, together with components of a reading apparatus therefor;

Figures 4-6 are plan views indicating the positions of HOEs and corresponding reading heads in further examples of the first aspect of the invention;

Figures 7-9 are cross-sections through examples of accesscontrol cards embodying the second aspect of the invention; and

Figures 10-12 are plan views indicating the positions of HOEs and corresponding illuminating positions in further of the second aspect of the invention.

It is to be noted that the drawings are presented purely for the purpose of illustrating the principles of the invention and are not necessarily drawn to a true or consistent relative scale, nor do they necessarily depict true diffraction and reflection angles.

Figures 1 and 2 each represent a cross-section through the thickness of a data carrier in the form of an accesscontrol card 1. It comprises a laminate of three layers: a plastics substrate or supporting layer 2, an intermediate layer 3 supported thereby and bearing a HOE 4, and a protective plastics layer 5 over the top of the hologram layer 3. The HOE 4 in this example is a so-called thick-film, volume or Bragg-type hologram comprising a three-dimensional interference fringe pattern stored within the material comprising layer 3 - which may be e.g. a silver halide emulsion, dichromated gelatin (DCG) or photopolymer. The HOE is produced, by a method as described below, so that when illuminated with a plane light beam 6 of selected wavelength and incidence angle it reconstructs a plane beam at a specified exit angle so that, having regard to the refractive indices of the materials selected for layers 2, 3 and 5 of the card, the reconstructed beam 7 becomes trapped within the structure of the card - on the one hand by virtue of total internal reflection at the plastics/air interface at the exposed surface of layer 5, and on the other hand by virtue of total internal reflection at the interface between the layers 2 and 3 or, more usually, at the plastics/air interface at the exposed surface of layer 2. In this regard the HOE 4 is preferably a reflection hologram as indicated by the reconstructed beam 7 shown in Figure 1, or alternatively it could be a transmission hologram as indicated by the reconstructed beam 7 shown in Figure 2. In any event, the beam 7 is transmitted through the structure of the card, away from the position at which it is illuminated by the beam 6, in a direction determined by the characteristics of the HOE 4.

Figure 3 shows a variation of the card of Figure 1 in which the reconstructed beam 7 from the HOE 4 is likewise trapped within the card structure but in this case a metal foil 8 or other specular reflective layer is interposed between the layers 2 and 3 to form one boundary of the effective light guide. Total internal reflection still occurs at the plastics/air interface at the exposed surface of layer 5.

The purpose of the HOE 4 in the access-control card as illustrated in Figures 1, 2 or 3 is to verify that card as an authentic token e.g. for gaining access to a restricted area etc. as indicated in the preamble of this specification. For this purpose, in use of the card it is presented to a reading apparatus which senses the presence of the reconstructed beam 7 transmitted away from the HOE in the selected direction when the HOE is illuminated with an appropriate incident beam 6. It will be appreciated that while the beam 7 remains trapped within the card structure its presence is undetectable by any normal light-sensitive means (including the human eye) disposed around it; (provision will be made, by means of a suitable filter or opaque region 13, to ensure that no detectable light can exit through the end of the card). Light can, however, be coupled out of the card if an element of similar refractive index to that of the layer 5 is placed in contact with the surface of that layer, so that total internal reflection no longer occurs at the interface.

A reading apparatus for such a card will therefore include, as also indicated in Figures 1, 2 and 3, a light source 9, such as a light-emitting diode (LED), positioned to illuminate the HOE 4 at the requisite angle to produce the reconstructed beam 7, and a reading head 10 including a light-coupling element 11 and a light detector 12, such as a photo-diode, positioned such as to pick up the light transmitted within the card away from the HOE. In this respect it will be understood that the light source 9 and reading head 10 will both be located at specified positions in relation to a card slot which defines the orientation of the card when it is located in, or passed through, the reading apparatus, so that light can be transmitted from the source 9 to the head 10 only when a card bearing a HOE 4 of the correct characteristics at the correct location on the card is presented to the apparatus. To prevent spoofing the apparatus simply by flooding it with light there will preferably also be one or more further, reference reading heads (not shown) located to detect light from a position on the card where none should be directed from the HOE; the associated logic will be arranged to accept the card as authentic only when the output of the primary reading head 10 is above a certain threshold while the output of the reference head(s) is below a certain threshold.

The essential features of the light-coupling element 11 in a reading head for cards as described above is that it is transparent to light of the wavelength of the reconstructed beam 7, of a suitable refractive index, and capable of making a reliable, intimate contact with an appropriate area of card surfaces over a useful service life. Having particular regard to the latter requirement, and that contact will preferably be maintained during passage of the cards through the apparatus, the light-coupling element may be in the form of a roller of compressible plastics material.

As so far described, there is only a single HOE to be detected on a card, representing a single bit of data. This may be sufficient for some authentication purposes but for higher-security applications there will generally be a multiplicity of HOEs, which can represent multi-bit access or identification codes, and which makes forgery very much more difficult.

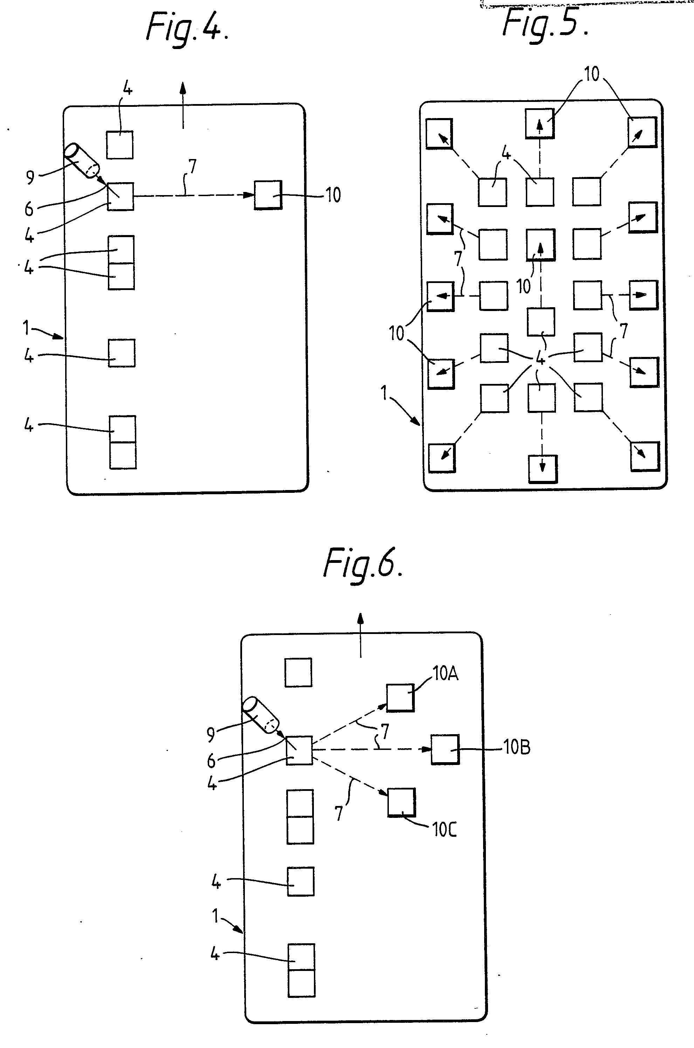

One such arrangement is shown in Figure 4. In this example there is a track of HOEs at positions on a card indicated at 4 which are illuminated and detected serially by a light source 9 and reading head 10 as the card is passed through a reading apparatus. The output level of the detector 10 at any instant will signal the presence or absence of a HOE in the path of the light source 9 and the distribution of HOEs and intervening spaces on different cards thus represents individual digitally-coded data (which can be read in conjunction with a separate clock track, if required, which may be provided by another track of HOEs or by conventional magnetic or light-reflective/transmissive means, or which may be self-clocking e.g. if the HOEs are capable of providing two distinct detector output levels or if a speed-controlled card transport is used).

Another arrangement is shown in Figure 5. In this example there is a distributed array of possible HOE positions 4 and a corresponding number of light sources (not shown) and reading heads 10, for illumination and detection of the various HOEs simultaneously. Different cards can be coded by either including or omitting an appropriate HOE at the various respective positions, the presence or absence of a HOE at each position of course being signalled by the output levels of the associated detectors when the cards are presented to the reading apparatus.

In any of these embodiments it is also possible to incorporate multiple HOEs at any one location on a card, to diffract the same incident beam in different directions through the card structure. An example of this is indicated in Figure 6 where in a card similar to that of Figure 4 three reconstructed beams are produced from a single HOE location, to be transmitted through the card structure and detected simultaneously by three reading heads 10A-10C. This technique can be used both to increase the number of bits of data which can be stored on a card and to make forgery even more difficult.

Figures 7 and 8 each represent a cross-section through the thickness of another data carrier in the form of an access-control card 101. It comprises a laminate of three layers: a plastics substrate or supporting layer 102, an intermediate layer 103 supported thereby and bearing a HOE 104, and a protective plastics layer 105 over the top of the hologram layer 103. The HOE 104 in this example is again a so-called thick-film, volume or Bragg-type hologram comprising a three-dimensional interference fringe pattern stored within the material comprising layer 103 - which may be e.g. a silver halide emulsion, dichromated gelatin (DCG) or photopolymer. The HOE is produced, by a method as described below, so that when illuminated with a plane light beam 106 of selected wavelength and incidence angle it reconstructs a plane beam 107 at a specified exit angle. These angles are so selected, having regard to the refractive indices of the materials selected for layers 102, 103 and 105 of the card, that the reconstructed beam 107 will be directed out of the card when the HOE 104 is illuminated with a beam 106 which has become trapped within the structure of the card - on the one hand by virtue of total internal reflection at the plastics/air interface at the exposed surface of layer 105, and on the other hand by virtue of total internal reflection at the interface between the layers 102 and 103 or, more usually, at the plastics/air interface at the exposed surface of layer 102. In this regard the HOE 104 is preferably a reflection hologram, to be illuminated by the incident beam 106 shown in Figure 7, or alternatively it could be a transmission hologram, to be illuminated by the incident beam 106 shown in Figure 8. In any event, the beam 107 is transmitted out of the structure of the card in a direction determination by the characteristics of the HOE 104.

Figure 9 shows a variation of the card of Figure 7 in which the HOE 104 is likewise illuminated with an incident beam 106 trapped within the card structure but in this case a metal foil 108 or other specular reflective layer is interposed between the layers 102 and 103 to form one boundary of the effective incident light guide. Total internal reflection still occurs at the plastics/air interface at the exposed surface of layer 105.

The purpose of the HOE 104 in the access-control card as illustrated in Figures 7, 8 or 9 is, as before, to verify that card as an authentic token e.g. for gaining access to a restricted area etc. For this purpose, in use of the card it is presented to a reading apparatus which senses the presence of the reconstructed beam 107 transmitted from the HOE in the selected direction when the HOE is illuminated with an appropriate incident beam 106. In order to transmit the beam 106 to the HOE it must first be coupled into the card at an appropriate angle to establish the required total internal reflection and this can be achieved by directing the illuminating beam into the card through an element of similar refractive index to that of the layer 105 placed into contact with the surface of that layer.

A reading apparatus for such a card will therefore include, as also indicated in Figures 7, 8 and 9, an illuminating head 109 with a light source 110, such as a light-emitting diode (LED), positioned to couple the beam 106 into the card through a light-coupling element 111 so as to illuminate the HOE 104 after transmission through the card at the requisite angle to produce the reconstructed beam 107, and a reading head including a light detector 112, such as a photo-diode, positioned such as to pick up the light transmitted out of the card away from the HOE. In this respect it will be understood that the illuminating head 109 and reading head 112 will both be located at specified positions in relation to a card slot which defines the orientation of the card when it is located in, or passed through, the reading apparatus, so that light can be transmitted from the source 110 to the detector 112 only when a card bearing a HOE 104 of the correct characteristics at the correct location on the card is presented to the apparatus. To prevent spoofing the apparatus simply by flooding it with light there will preferably also be one or more further, reference reading heads (not shown) located to detect light from a position on the card where none should be directed from the HOE; the associated logic will be arranged to accept the card as authentic only when the output of the primary reading head 112 is above a certain threshold while the output of the reference head(s) is below a certain threshold.

The essential features of the light-coupling element 111 in an illuminating head for cards as described above is that it is transparent to light of the wavelength of the illuminating beam 106, of a suitable refractive index, and capable of making a reliable, intimate contact with an appropriate area of card surfaces over a useful service life. Having particular regard to the latter requirement, and that contact will preferably be maintained during passage of the cards through the apparatus, the light-coupling element may as in the case of the earlier-described embodiments be in the form of a roller of compressible plastics material.

It will be appreciated that unless and until the HOE 104 is illuminated by a beam correctly coupled into the card its presence is undetectable by any normal light-sensitive means (including the human eye) disposed around the card. Provision will be made, by means of a suitable filter or opaque region 113, to ensure that no potentially replaying light can enter through the end of the card.

As so far described, there is only a single HOE to be detected on the card 101, representing a single bit of data. This may be sufficient for some authentication purposes but for higher-security applications there will generally be a multiplicity of HOEs, which can represent multi-bit access or identification codes, and which makes forgery very much more difficult.

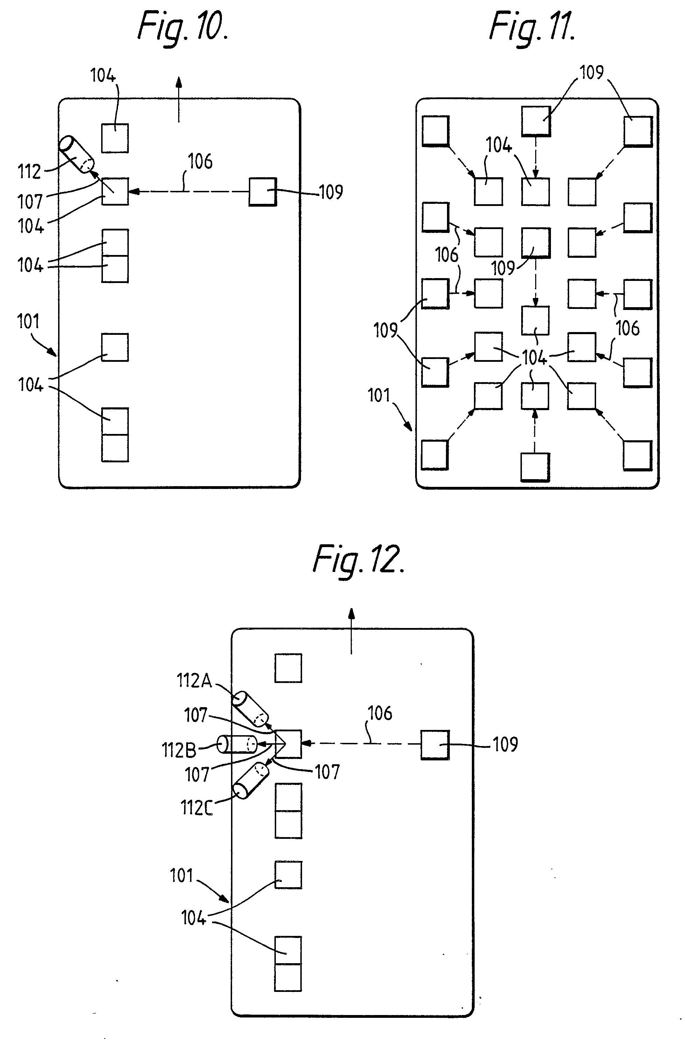

One such arrangement is shown in Figure 10. In this example there is a track of HOEs at positions on a card indicated at 104 which are illuminated and detected serially by an illuminating head 109 and reading head 112 as the card is passed through a reading apparatus. The output level of the detector 112 at any instant will signal the presence or absence of a HOE in the path of the beam 106 from the illuminating head 109 and the distribution of HOEs and intervening spaces on different cards thus represents individual digitally-coded data (which can be read in conjunction with a separate clock track, if required, which may be provided by another track of HOEs or by conventional magnetic or light-reflective/transmissive means, or which may be self-clocking e.g. if the HOEs are capable of providing two distinct detector output levels or if a speed-controlled card transport is used).

Another arrangement is shown in Figure 11. In this example there is a distributed array of possible HOE positions 104 and a corresponding number of illuminating heads 109 and light detectors (not shown), for illumination and detection of the various HOEs simultaneously. Different cards can be coded by either including or omitting an appropriate HOE at the various respective positions, the presence or absence of a HOE at each position of course being signalled by the output levels of the associated detectors when the cards are presented to the reading apparatus.

In any of these embodiments it is also possible to incorporate multiple HOEs at any one location on a card, to diffract the same incident beam in different directions out of the card structure and direct the output light to an array of detectors. An example of this is indicated in Figure 12 where in a card similar to that of Figure 10 three reconstructed beams are produced from a single HOE location, to be detected simultaneously by three reading heads 112A-112C. This technique can be used both to increase the number of bits of data which can be stored on a card and to make forgery even more difficult.

It should be noted with reference to Figures 4 to 6 and 10 to 12 that the size of HOEs 4 and 104 shown therein has been greatly exaggerated in order to illustrate the operating principles of the respective cards. In practice such HOEs may be produced with a characteristic dimension in the order of 0.5mm across, meaning that a track of 150 or so data bits could be incorporated within standard credit card dimensions.

Turning now to the process used for manufacturing HOEs 4 and 104 suitable for incorporation in cards as described above, it is generally known in the art that volume HOEs can be made by recording within a suitable volume recording material (such as silver halide etc. mentioned above) the interference pattern produced by interfering two specular, mutually coherent beams of light. One of these beams (or its conjugate) is reproduced as the reconstructed beam when the resultant HOE is reilluminated with a beam of appropriate wavelength and incidence angle. It will be appreciated, however, that to produce a reconstructed beam capable of total internal reflection as described above with reference to the embodiments of Figures 1 to 6, or to illuminate a HOE with an incident beam transmitted by total internal reflection as described above with reference to the embodiments of Figures 7 to 12, its exit or incidence angle respectively will be very shallow, (much more so than as actually depicted in the drawings), meaning that the incidence angle of one of the beams during exposure would have to be correspondingly shallow if a purely conventional production process is followed. This would cause problems in enabling sufficient light penetration from that beam into the emulsion which forms layer 3 or 103 in the completed card, to produce a strong fringe pattern. Moreover, in the case where total internal reflection at the layer 2/3 or 102/103 interface is required the impossible situation would be faced of actually having to direct one of the beams along the inside of the emulsion.

To overcome these problems it is proposed in accordance with the invention to expose the emulsion using steeper and more manageable incidence angles and then treat the emulsion with a substance (such as an aqueous solution of triethanolanime in the case of a silver halide emulsion) which produces a swelling of its structure. This will have two effects. Firstly it tilts the angle of the interference fringes stored in the emulsion thus shifting the reillumination and reconstructed angles to the degree required to establish the conditions for total internal reflection (in the case of Figures 1 to 6) or to respond to a total internal reflection incident beam (in the case of Figures 7 to 12). Secondly it increases the spacing of the interference fringes and thus lengthens the wavelength of the light required for reillumination. In particular this means that a HOE produced with visible light can be made to replay in infra-red light - which has advantages in discriminating the light of reconstructed beams 7 and 107 from ambient light when reading cards as described above and means that the external layers of the cards can be made from visibly-opaque (though IR-transparent) plastics.

An alternative production technique would be to put, say, a prism in optical contact (achieved with index matching fluid) with one face of the film or to immerse the film in an oil bath in order to eliminate an air/plastics interface at a shallow angle of incidence which would otherwise prevent the "object" light coupling efficiently into the film.

Although so far exemplified above in terms of thick-film or volume holograms, it is equally possible to produce HOEs for incorporation in cards or other data carriers in accordance with the invention by embossing. While embossed holograms are surface relief structures and hence generally less angularly and wavelength selective than volume holograms this may not be too much of a security drawback in systems according to the invention where special steps are in any event required to couple the reconstructed beam out of the card structure or to transmit a suitable illuminating beam into the card structure. Embossed HOEs, on the other hand, may have advantages in some applications in that by only slightly modifying the production technique of conventional "display" holograms as currently used on credit cards etc. a useful improvement in security can be achieved by the addition of a machine-readable HOE.

In the conventional embossed hologram production technique a "master" hologram is made by recording a hologram in photoresist material which is then developed and stores the hologram as a surface relief pattern. From this master an electroplating process can be used to form a negative surface relief in a suitable metal which can be used to emboss the hologram into heated plastics or the like. To produce a totally internally reflecting HOE or a HOE responsive to a totally internally reflecting incident beam as used in the present invention the addition required is to ensure that a beam incident at a shallow angle can couple into the recording material e.g. by using a prism with index matching fluid in contact with the surface or by immersing the system in an oil bath as indicated above.

In some applications of the invention it may be found convenient to combine data storage by means of coded tracks or arrays of HOEs as previously described with other more conventional means of data storage, such as a magnetically-coded strip or printed bar-code. When combined with magnetic coding the holographic part could store secure permanent data such as an access code while the magnetic strip could store volatile data which is updated when used e.g. in a cash-dispensing machine.

In some applications it may also be found useful to combine data storage by means of single or coded tracks or arrays of HOEs with visible display holograms suitable for visual authentication. In such systems the presence of the machine-readable structure would remain completely hidden to an observer, giving an additional level of security. Since conventional embossed "display" holograms are rainbow transmission holograms that reconstruct using light reflected off a foil backing this would already give an inner reflective surface to trap the light from, or for illuminating, one or more additional HOEs provided for machine-reading, in an embossed system constructed similarly to the volume systems of Figures 3 and 9.

Data carriers in accordance with the invention can also be used in applications where there are a plurality of HOEs coupling light into or out of a card or other token where each represents a unit of value, and which must be decremented by so many units according to the value of goods or services which are purchased from time to time with that token. Decrementing of each unit is to be achieved by rendering the corresponding HOE ineffective in transmitting light from a source to a detector in a reading apparatus as generally discussed above. This may be achieved by incorporating within the totally internally reflecting light path in the token, (from or to the HOE as the case may be), a dye which darkens e.g. when heated above a predetermined temperature or when exposed to a predetermined intensity or wavelength of light. To cancel a driven unit of value from the token a local area is accordingly heated or otherwise treated as indicated above to darken that area and thereby prevent the transmission of light through the token to or from a reading or illuminating position from or to the corresponding HOE.

In all of the embodiments of the invention described above the HOEs 4 or 104 as the case may be are plane diffraction gratings used to reconstruct a plane output beam 7 or 107 from a plane incident beam 6 or 106. However, this need not necessarily be the case and in other embodiments HOEs of more complex form may be employed to increase still further the security of the system. For example, in the embodiments of Figures 1 to 6 the emitter 9 may be arranged to direct a divergent, convergent or other more complex incident beam 6 to the HOE(s) 4, in accordance with the characteristics of a lens or light-scrambling element (which may itself be a holographic element) associated with the light source. In this case the characteristics of the HOE(s) 4 must then be matched to those of the incident beam in order to reconstruct a plane output beam 7 at the correct angle for transmission through the card as previously described. Likewise, in the embodiments of Figures 7 to 12 the characteristics of the HOE(s) 104 may be such as to reconstruct divergent, convergent or other more complex or scrambled output beams 107 from the plane incident beam 106 and the detector 112 will then have to be equipped with a matched lens or "unscrambling" optical element in order to detect the correct light output level.

## Claims

1. A data carrier (1) bearing at least one holographic optical element (HOE) (4) at a (respective) first location, characterised in that the or each said HOE (4) is adapted to couple into the structure of the data carrier (1) light of a selected wavelength which is incident thereto from a selected direction (6); and the data carrier (1) is constructed such as to trap the light coupled by the or each said HOE (4) and transmit the same (7) through the structure of the data carrier (1) to one or more respective second locations spaced from the first location(s), by a process involving total internal reflection of such light (7) at an exposed surface of the data carrier (1); whereby the transmitted light (7) can be coupled out of the structure of the data carrier (1) by placing an element (11) of selected refractive index into contact with said exposed surface at said second location(s).

2. A data carrier (1) according to claim 1 constructed such as to transmit the light (7) trapped as aforesaid to said location(s) by a process involving total internal reflection of such light (7) at two opposite exposed surfaces thereof.

3. A data carrier (1) according to claim 1 constructed such as to transmit the light (7) trapped as aforesaid to said second location(s) by a process involving total internal reflection of such light (7) at said exposed surface and reflection of such light (7) at a specular reflective surface (8) provided within the structure of the data carrier (1) in parallel with said exposed surface.

4. A data carrier (1) according to any preceding claim comprising a plurality of said HOEs (4) disposed in a coded track, each said HOE (4) being adapted to couple into the structure of the data carrier (1) light of the same selected wavelength which is incident thereto from the same selected direction (6) and to cause the transmission thereof as aforesaid (7) to respective said second locations (10) which lie along a track parallel to the first-mentioned track.

5. A data carrier (1) according to any one of claims 1 to 3 comprising a plurality of said HOEs (4) disposed in a distributed coded array, said HOEs (4) being adapted to couple into the structure of the data carrier (1) simultaneously light of a respective selected wavelength which is incident thereto simultaneously from respective selected directions and to cause the simultaneous transmission thereof as aforesaid (7) to respective said second locations (10) which are disposed in a second distributed array.

6. A data carrier (1) according to any preceding claim wherein the or at least one of said HOE(s) (4) is in the form of a multiple HOE (4) adapted to couple into the structure of the data carrier (1) light of a selected wavelength which is incident thereto from a selected direction (6) and to cause the transmission thereof as aforesaid (7) simultaneously in different directions through the structure of the data carrier (1) to a plurality of separate said second locations (10A,10B,10C).

7. A data carrier (1) according to any preceding claim incorporating, at a predetermined location in the respective transmission path through the data carrier of light coupled thereinto by the or each said HOE (4), a dye which is adapted to alter its optical characteristics to prevent the transmission of such light (7) to the respective said second location when said dye is heated above a predetermined temperature or is exposed to a predetermined intensity or wavelength of light.

8. A data carrier (1) according to claim 3 or to any other preceding claim when appended thereto, comprising also a transmission display hologram which is adapted to be illuminated by light reflected from said specular reflective surface (3).

9. A data carrier (101) bearing at least one holographic optical element (HOE) (104), characterised in that the data carrier (101) is constructed such as to trap within its structure light (106) of a selected wavelength which is incident thereto at a selected angle through an element (111) of selected refractive index placed into contact with an exposed surface of the data carrier (101) at one or more first locations, and to transmit the same (106) through its structure to one or more respective second locations spaced from the first location(s) by a process involving total internal reflection of such light (106) at said exposed surface; and in that the data carrier (1) bears at the or each said second location a said HOE (104) which is adapted to couple out of the structure of the data carrier (101) in a selected direction (107) light which is incident thereto by transmission from (the respective) said first location as aforesaid.

10. A data carrier (101) according to claim 9 constructed such as to transmit the light (106) trapped as aforesaid to said second location(s) by a process involving total internal reflection of such light (106) at two opposite exposed surfaces thereof.

11. A data carrier (101) according to claim 9 constructed such as to transmit the light (106) trapped as aforesaid to said second location(s) by a process involving total internal reflection of such light (106) at said exposed surface and reflection of such light (106) at a specular reflective surface (108) provided within the structure of the data carrier (101) in parallel with said exposed surface.

12. A data carrier (101) according to any one of claims 9 to 11 comprising a plurality of said HOEs (104) disposed in a coded track, each said HOE (104) being adapted to couple out of the structure of the data carrier (101) in the same selected direction (107) light of the same selected wavelength which is incident thereto (106) by transmission as aforesaid from respective said first locations (109) which lie along a track parallel to the first-mentioned track.

13. A data carrier (101) according to any one of claims 9 to 11 comprising a plurality of said HOEs (104) disposed in a distributed coded array, said HOEs (104) being adapted to couple out of the structure of the data carrier (101) simultaneously in respective selected directions light of a respective selected wavelength which is incident thereto (106) simultaneously by transmission as aforesaid from respective said first locations (109) which are disposed in a second distributed array.

14. A data carrier (101) according to any one of claims 9 to 13 wherein the or at least one of said HOE(s) (104) is in the form of a multiple HOE (104) adapted to couple out of the structure of the data carrier (101) simultaneously in a plurality of different selected directions (107) light of a selected wavelength which is incident thereto (106) by transmission as aforesaid from the respective said first location (109).

15. A data carrier (101) according to any one of claims 9 to 14 incorporating, at a predetermined location in the respective transmission path through the data carrier (101) of light transmitted as aforesaid (106) to the or each said HOE (104), a dye which is adapted to alter its optical characteristics to prevent the transmission of such light (106) to the respective HOE (104) when said dye is heated above a predetermined temperature or is exposed to a predetermined intensity or wavelength of light.

16. A data carrier (101) according to claim 11 or to any other preceding claim when appended thereto, comprising also a transmission display hologram which is adapted to be illuminated by light reflected from said specular reflective surface (108).

17. A reading apparatus for a data carrier (1) according to any one of claims 1 to 8, characterised by: at least one light emitter (9) whereby the or each said HOE (4) of a said data carrier (1) can be illuminated with light of the said selected wavelength from the said selected direction (6) when the data carrier (1) is received within the reading apparatus; at least one element (11) of selected refractive index which is adapted to be placed into contact with said exposed surface of the data carrier (1) at the respective said second location(s) thereof simultaneously with the illumination of the respective HOE (4) as aforesaid, whereby the light transmitted to the respective said second location(s) as aforesaid (7) can be coupled out of the structure of the data carrier (1) through said element(s) (11); and at least one light detector (12) for detecting light coupled out of the structure of a said data carrier (1) through said element(s) (11).

18. A reading apparatus for a data carrier (101) according to any one of claims 9 to 16, characterised by: at least one light emitter (110) with an associated element (111) of selected refractive index which is adapted to be placed into contact with said exposed surface of a said data carrier (101) at one or more said first locations thereof when the data carrier (101) is received within the reading apparatus, whereby to direct light of said selected wavelength from said emitter (110) through said element (111) at said selected angle to be trapped within the structure of the data carrier (101); and at least one light detector (112) for detecting such trapped light which is transmitted (106) from said first location(s) and coupled out (107) of the structure of the data carrier (101) by one or more said HOE(s) (104) as aforesaid.

19. A reading apparatus according to claim 17 or claim 18 wherein said element (11,111) of selected refractive index is in the form of a roller of compressible material (11,111).

20. A method of manufacturing a thick-film HOE (4) for a data carrier (1) according to any one of claims 1 to 8 which comprises the step of interfering within the volume of a holographic recording medium (3) two specular, mutually coherent beams of light incident thereto from selected directions, the incidence angle of the said beam which corresponds to the reconstructed beam (7) of the finished HOE (4) being steeper than the desired angle of such reconstructed beam (7); characterised by the subsequent step of swelling said medium (3) whereby to reduce the angle of such reconstructed beam (7) to enable its transmission through the structure of the finished data carrier (1) by a process involving total internal reflection as aforesaid.

21. A method of manufacturing a thick-film HOE (104) for a data carrier (101) according to any one of claims 9 to 16 which comprises the step of interfering within the volume of a holographic recording medium (103) two specular, mutually coherent beams of light incident thereto from selected directions, the incidence angle of the said beam which corresponds to the incident beam (106) for the finished HOE (104) being steeper than the desired angle of such incident beam (106); characterised by the subsequent step of swelling said medium (103) whereby to reduce the angle of such incident beam (106) to enable the HOE (104) to reconstruct from a beam transmitted to it through the structure of the finished data carrier (101) by a process involving total internal reflection as aforesaid.

22. A method according to claim 20 or claim 21 wherein said swelling step is effective also to change the reconstruction wavelength of the HOE (4,104) from the visible to the infra-red band.

*Fig.1.*

*Fig.2.*

*Fig.3.*

Fig.4.

Fig.5.

Fig.6.

*Fig.7.*

*Fig.8.*

*Fig.9.*

# Fig.10.

104

112

107

104

106

109

104

104

101

104

# Fig.11.

109

104

106

109

109

106

104

101

# Fig.12.

112A

107

112B

107

112C

107

106

109

101

104